# EUROPÄISCHE PATENTANMELDUNG

(11) **EP 1 134 391 A2**
(43) Veröffentlichungstag der Anmeldung: **19.09.2001**
(21) Anmeldenummer: 01102036.9
(22) Anmeldetag: 30.01.2001
(51) Int. Cl.: F02D 41/14

(54) **Programmierbare Steuer-und Regelelektronik für eine Brennkraftmaschine**

(30) Priorität: 01.02.2000 DE 10004330
(71) Anmelder: DEUTZ Aktiengesellschaft, 51063 Köln (DE)
(72) Erfinder: Töpfer-Hartung, Corinna, 53604 Bad Honnef (DE); Stellwagen, Karl, 67227 Frankenthal (DE); Besler, Boris, 76131 Karlsruhe (DE)

(57) **Zusammenfassung**

1. Programmierbare Steuer- und Regelelektronik für eine Brennkraftmaschine.

2.1 Bei einem bekannten Verfahren und der entsprechenden Vorrichtung sind folgende Funktionen integriert: "Gasmotor-Verbrennungsrelegung, Programm für automatischen Start und Stop des Aggregats, Überwachung der Gas-, Wasser-, Schmieröl- und Abgastemperaturen und Drücke bzw. Füllstände innerhalb der Anlage, Ansteuerung der Zündanlage, Einstellung des Drehzahlreglers, Regelung der Hilfskreisläufe, Überwachung der Generator-Wicklungstemperatur, Selbstüberwachung der Regelanlage und der Sonden sowie Speicherung der gemessenen Werte für Kontroll- und Diagnosezwecke".

2.2 Erfindungsgemäß wird mit einem Abgas-Sensor 6 während des Betriebes der Brennkraftmaschine kontinuierlich die Konzentration der Stickoxide (NOₓ) und/oder des Fluors und/oder des Chlors im Abgas der Brennkraftmaschine wertemäßig erfaßt. Die Werte der Stickoxid-Emission sind sowohl zur Überwachung als auch zur Steuerung und Regelung einer entsprechend ausgerüsteten Brennkraftmaschine besonders geeignet.

## Beschreibung

Die Erfindung betrifft ein Verfahren zum Steuern, Regeln und Überwachen einer Brennkraftmaschine mit einer programmierbaren Steuer- und Regelelektronik, der von an der Brennkraftmaschine angeordneten Sensoren und/oder Gebern Meßsignale zugeführt werden und wobei die Steuer- und Regelelektronik Stellglieder und/oder Aktoren zum Eingriff in den Betrieb der Brennkraftmaschine ansteuert und wobei die Steuer- und Regelelektronik eine Schnittstelle für einen Datenaustausch aufweist sowie eine entsprechend ausgebildete Steuer- und Regelelektronik.

Ein derartiges Verfahren und eine entsprechende Vorrichtung ist aus der Firmendruckschrift DEUTZ MWM "TEM-System" bekannt. Dabei sind in dieses TEM-System folgende Funktionen integriert: "Gas-motor-Verbrennungsrelegung, Programm für automatischen Start und Stop des Aggregats, Überwachung der Gas-, Wasser-, Schmieröl- und Abgastemperaturen und Drücke bzw. Füllstände innerhalb der Anlage, Ansteuerung der Zündanlage, Einstellung des Drehzahlreglers, Regelung der Hilfskreisläufe, Überwachung der Generator-Wicklungstemperatur, Selbstüberwachung der Regelanlage und der Sonden sowie Speicherung der gemessenen Werte für Kontroll- und Diagnosezwecke". Das TEM-System kann mit all diesen Funktionen intelligent umgehen und ermöglicht somit einen besonders sicheren Lauf der Brennkraftmaschine beziehungsweise der Anlage unter allen Betriebsbedingungen.

Der Erfindung liegt die Aufgabe zugrunde, das zuvor beschriebene System und Verfahren zu verbessern.

Diese Aufgabe wird erfindungsgemäß dadurch gelöst, daß mit einem Abgas-Sensor während des Betriebes der Brennkraftmaschine kontinuierlich die Konzentration der Stickoxide (NOₓ) und/oder des Fluors und/oder des Chlors im Abgas der Brennkraftmaschine wertemäßig erfaßt wird. Die Werte insbesondere der Stickoxid-Emission sind sowohl zur Überwachung als auch zur Steuerung und Regelung einer entsprechend ausgerüsteten Brennkraftmaschine besonders geeignet. So geben diese Werte, bezogen auf einen jeweiligen Betriebspunkt der Brennkraftmaschine, der beispielsweise durch Messen der Drehzahl der zugeführten Kraftstoffmenge und ggf. weiterer Betriebsparameter wie verschiedener Temperaturen bestimmt werden, Aufschlüsse über die Güte der ablaufenden Verbrennung von Kraftstoff und Verbrennungsluft und hieraus abzuleitender Rückschlüsse. Diese Erkenntnisse können zur späteren Auswertung in entsprechenden Speicherbausteinen der Steuer- und Regelelektronik gespeichert werden oder aber insbesondere zur aktiven Steuerung und Regelung der Brennkraftmaschine verarbeitet werden. Auch ist ein Eingriff in den Motorlauf notwendig, wenn schädliche Stoffe (Fluor, Chlor) für den Anlagenbetrieb gemessen werden. Diese Stoffe treten gegebenenfalls beim Betrieb mit Deponiegas auf. In diesem Fall wird dann zusätzlich zu dem Abgas-Sensor für die Erfassung der Konzentration der Stickoxide ein Abgas-Sensor für die Erfassung der Konzentration von Fluor und/oder ein Abgas-Sensor für die Erfassung der Konzentration von Chlor eingesetzt. Der Abgas-Sensor zur Erfassung der Konzentration der Stickoxide ist also normalerweise beziehungweise bevorzugt immer vorhanden.

In Weiterbildung der Erfindung weist der Abgas-Sensor eine ionenleitende, insbesondere eine kationenleitende Keramik (Festelektrolyt), eine Hilfselektrode zur Anpassung an die Gasart, eine Referenzelektrode und eine Arbeitselektrode auf. Mit einem derart ausgebildeten Abgas-Sensor ist es möglich, ohne weiteren gerätetechnischen Aufwand kontinuierlich die Konzentration der Stickoxid-Emission einer Brennkraftmaschine während des dauernden Betriebs derselben zu erfassen. In diesem einfachen Aufbau des Abgassensors besteht der wesentliche Unterschied gegenüber bekannten Stickoxid-Analyse-Vorrichtungen, die aufgrund ihres hohen Geräteaufwandes und der ständigen Notwendigkeit der Eichung nur für diskontinuierliche Messungen geeignet waren. Ein Beispiel für ein derartiges Analyseverfahren ist ein Meßprinzip, das die Chemo-Lumineszenz (chemisch bewirkte Lichterscheinung) ausnutzt, die bei der Reaktion von Stickoxid (NO) mit Ozon (O₃) im Bereich zwischen 590 und 3000 nm auftritt.

In weiterer Ausgestaltung der Erfindung wird eine elektromotorische Kraft (EMK) (der freibeweglichen Elektronen) zwischen Referenzelektrode und Hilfselektrode des Abgas-Sensors für ein direktproportionales Ausgangsspannungssignal zu der Gaskonzentration ausgewertet. Dabei erfolgt in weiterer Ausbildung eine potentiometrische Messung der Gaskonzentration. Dieser Abgas-Sensor kann durch Modifizierung der Hilfselektrode ohne weiteres an andere zu messende Gasarten (zum Beispiel Fluor, Chlor) angepaßt werden. Durch die Messung von Chlor oder Fluor kann der Betrieb mit Deponiegasen sicher gestaltet werden. Treten solche Bestandteile im Abgas auf und werden diese von dem selektriven Sensor dedektiert, so kann der Motor durch die erfindungsgemäße Steuerung beispielsweise abgeschaltet werden, um Schäden zu vermeiden.

In Weiterbildung der Erfindung ist die so ausgebildete Steuer- und Regelelektronik insbesondere zur Ansteuerung des Stellantriebs eines Gemischreglers eines Gasmotors, insbesondere eines Otto-Gasmotors geeignet. Hier hat ein nicht optimal eingestelltes Gas-Luft-Gemisch direkt eine Auswirkung auf die Konzentration des Stickoxids. Die Erfindung ist auch vorteilhaft bei selbstzündenden Brennkraftmaschinen einsetzbar, hier wird dann anhand der gemessenen und ausgewerteten Werte beziehungsweise Konzentrationen der Förderbeginn und ggf. auch die Aufteilung der Einspritzung in eine Vor- und eine Haupteinspritzung eingestellt.

In weiterer Ausgestaltung der Erfindung ist die Steuer- und Regelelektronik mit bedarfsmäßig vorhandenen weiteren Bausteinen ausgerüstet. So ist beispielsweise ein Baustein "Laufruhemessung" vorgesehen, mit dem das von der Brennkraftmaschine abgegebene Moment auf die Kurbelwelle zylinderselektiv bestimmt wird. Durch diese Einrichtung können insbesondere genaue zylinderselektiv zuordnungsbare Fehler in der Verbrennung erkannt werden und es können geeignete Korrekturschritte eingeleitet werden. So kann beispielsweise festgestellt werden, ob bei einem Gasmotor die einer Zündkerze eines Zylinders zugeführte Energie ausreichend zur sicheren Zündung des im Brennraum vorhandenen Gemisches ist oder aber beispielsweise durch Alterung oder Verschleiß der Zündkerze eine höhere Zündenergie zuzuführen ist. Dies war bisher nur durch eine Temperaturerfassung in jedem Brennraum der Brennkraftmaschine möglich.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Fig. 1:: ein Übersichtsbild der programmierbaren Steuer- und Regelelektronik,
- Fig. 2:: eine Prinzipskizze des NOₓ-Sensors und
- Fig. 3:: Regelkreise der programmierbaren Steuer- und Regelelektronik

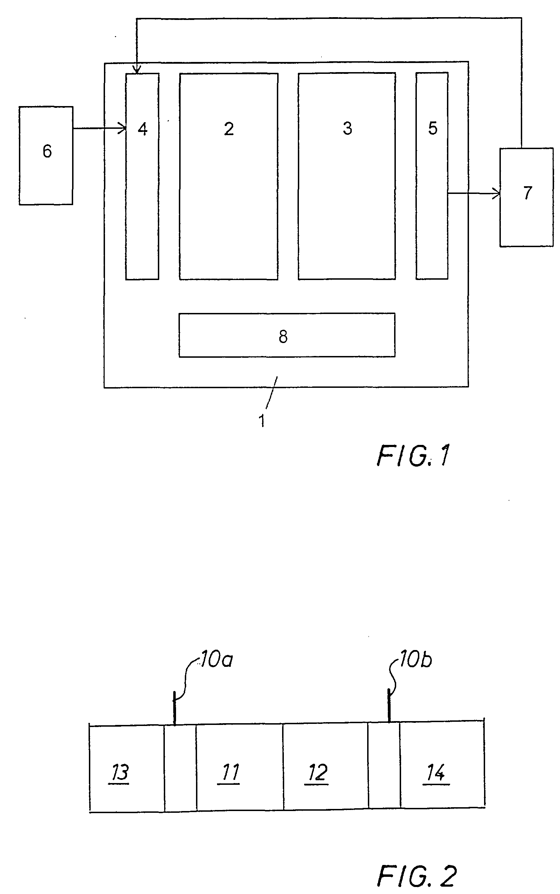

Das Übersichtsbild gemäß Fig. 1 zeigt die programmierbare Steuer- und Regelelektronik 1, das GEM, das ein selbstständig arbeitendes Meß-, Steuer- und Regelgerät für das Sensor-Aktor-Management ist. Es ist nutzbar für alle Arten von Brennkraftmaschinen, insbesondere aber selbstzündende Brennkraftmaschine und Gasmotoren, basierend auf Ottomotoren oder Dieselmotoren. Mit diesem Gerät können mehrere abhängig oder verknüpfte Aufgaben bearbeitet werden und das Gerät ist speziell für solche Motoren entwickelt, die unter rauen Umgebungsbedingungen und Betriebstemperaturen von - 15°C bis + 80°C ihre sichere Funktion erfüllen müssen. Das Gerät bzw. System ist unter Berücksichtigung der entsprechenden Schutzklassen ausgelegt und somit sind alle Ein- und Ausgänge überspannungsfest, kurzschlußfest und diagnosefähig, d. h., die Software kann feststellen, ob ein Kurzschluß oder eine Leitungsunterbrechung (Plausibilitätsprüfung) vorhanden ist. Desweiteren findet eine diesbezügliche Selbstdiagnose der internen Hardware statt. Regelventile können direkt angesteuert werden über ein pulsweitenmoduliertes (PWM)-Signal oder über eine integrierte Ansteuerelektronik.

Das Gerät ist in ein robustes Alu-Druckguß-Gehäuse eingebaut und bietet somit sowohl Sicherheit gegen elektromagnetische Störungen als auch zuverlässigen Schutz bei mechanischer Beanspruchung. Die programmierbare Steuer- und Regelelektronik 1 besteht im wesentlichen aus den Funktionsgruppen "Motorsteuerung" mit Drehzahlregelung, Anti-Klopf-Regelung und Zündsystem und der "Motorüberwachung" mit Emissionsregelung, Laufruhenüberwachung und den Sensoren 6. Die an der Brennkraftmaschine angebrachten Sensoren 6 versorgen die Elektronik mit allen relevanten physikalischen Größen. Entsprechend dieser Information über den momentanen Motorzustand und den Vorgaben/Betriebsdaten des Anlagenmanagements steuert und überwacht die programmierbare Steuer- und Regelelektronik 1 die Motoren. Bei Über-/Unterschreitung der vorgegebenen Grenzwerte, werden Aktionen ausgelöst, welche durch Warnungen und/oder Abstellungen den Motor bei auftretenden abnormalen Betriebszuständen schützen. Diese Verletzungen der vorgegebenen Betriebsparameter werden in einem Betriebstagebuch gespeichert und können so im Bedarfsfall zur Schadensdiagnostik herangezogen werden (Auslesen des Fehlerspeichers zur Störungsdiagnose, zur Visualisierung und für Service- bzw. Kundendienstzwecke). Die Aufzeichnung der Maschinendaten erfolgt papierlos auf elektronischem Wege. Um auch einen Datenaustausch mit anderen intelligenten Einheiten und Systemen zu ermöglichen (Anlagenmanagement, d. h. übergeordnete Steuerung/Schaltanlage/Service-Laptop) ist eine CAN-Schnittstelle nach entsprechender Spezifikation vorhanden. Dieses verringert den sonst üblichen sehr hohen Verdrahtungsaufwand drastisch. Kennlinien, Parameter und Kalibrierdaten für das Sensor-Aktor-Management, sowie Steuerungkonfigurationen können in einem nicht flüchtigen Speicher abgelegt werden. Ein externer Zugriff auf diese Daten ist über eine Editor-Software und ein Laptop möglich.

Die programmierbare Steuer- und Regelelektronik 1 beinhaltet als zentrale Elemente eine Steuereinheit 2 und eine Überwachungseinheit 3. Sie weist weiterhin Eingänge 4 und Ausgänge 5 sowie eine Schnittstelle 8 für Datenaustausch auf. Die Eingänge 4 sind mit Sensoren/Gebern 6 verbindbar und die Ausgänge 5 mit Stellgliedern/ Aktoren 7, wobei diese auch gleichzeitig mit den Eingängen 4 verschaltet sind. Die Steuereinheit 2 beinhaltet Rechner für die Drehzahlregelung, die Anti-Klopf-Regelung und das Zündsystem. Die Überwachungseinheit 3 überwacht und regelt das Gemisch sowie die Emissionen. Weiterhin erfolgt hier eine Laufruheüberwachung, die gleichzeitig eine Zylinderausfallerkennung darstellt. Sensoren 6 sind vorhanden für Motorkühlwasser-Temperatureintritt, Motorkühlwasser-Temperaturaustritt, Receiver-Temperatur, Receiver-Druck, Schmieröl-Druck, Vibrations/Körperschall, Drehzahl, Impulsaufnehmer, Zünd-OT, Drosselklappenposition, NOₓ-Messung beziehungsweise Fluor und/oder Chlor-Messung sowie optional für Schmieröltemperatur, Schmierölqualität und Schmierölstand. Bei Einsatz der programmierbaren Steuer- und Regelelektronik 1 bei einem Dieselmotor sind selbstverständlich alternativ beispielsweise zu dem Sensor 6 für die Drosselklappenposition ein Sensor 6 für die Regelstangenposition (soweit vorhanden) oder sonstige motorspezifische Elemente vorhanden.

Nachfolgend werden für einen Gasmotor die vorhandenen Regelungen spezifiziert:
1. Zündung
   Mit Hilfe einer digitalen Zündanlage als Bestand der Steuereinheit 2, die mikroprozessorgesteuert ist, werden Zündzeitpunkt und Verteilung der Zündenergie für jeden einzelnen Zylinder berechnet. Das komprimierte Gas-Luft-Gemisch wird durch einen Hochspannungsfunkenüberschlag, erzeugt durch die zylinderzugehörige Zündspule, an der Zündkerze entflammt. Der Zündzeitpunkt kann in Abhängigkeit von der Gasart oder der Drehzahl unter Berücksichtigung des Drehzahlsignales 6 voreingestellt werden. Die Verstellung des Zündzeitpunktes erfolgt zylinderselektiv und die Zündenergie beträgt 125 mJ bis 150 mJ.
2. Gemischregelung
   Die Gemischregelung erfolgt in der Überwachungseinheit 3 zur Einstellung des optimalen Kraftstoff-Luft-Verhältnisses für alle Betriebszustände. Hierzu wird im Abgas mittels eines Sensors 6 (Fig. 2) die Konzentration von NOₓ gemessen und weiterverarbeitet. Diese Informationen dienen zur Ansteuerung des Verstellgliedes 7 in Form des Verstellantriebes vom Gemischregler. Dadurch wird das optimale Kraftstoff-Luft-Verhältnis eingestellt und somit werden die gewünschten Schadstoffwerte eingehalten. Ebenso ist ein Eingriff in den Lauf des Motors bei auftretenden schädlichen Bestandteilen (Fluor, Chlor) möglich.
3. Klopfregelung
   Die Klopfregelung ist wiederum Bestandteil der Steuereinheit 2 und diese wird verwendet, um bei schwankender Gasqualität hinsichtlich der Methanzahl bzw. Klopffestigkeit des Gemisches eine optimale Regelung individuell für jeden einzelnen Zylinder zu erreichen. Grundlage dieser Regelung ist die Körperschallmessung mittels elektrischer Sensoren 6. Die Signale werden digitalisiert und anschließend weiterverarbeitet. Bei klopfender Verbrennung wird der Zündzeitpunkt verändert und der Zündwinkel wird in Richtung "spät" verstellt. Wird der vorgegebene Zündwinkel überschritten, erfolgt eine Leistungsreduktion. Wird der Grenzwert wieder unterschritten, kann die Leistung wieder erhöht werden und die Zündzeitpunktverstellung wird zurückgenommen. Bei sehr starker Absenkung der Methanzahl wird eine Leistungsreduktion durchgeführt.
4. Zylinderausfallerkennung
   Diese ist wiederum Bestandteil der Überwachungseinheit 3 und ermöglicht es, auf Basis der hochgenauen Drehzahlmessung 6 und Drehunförmigkeitsbestimmung das abgegebene Moment auf die Kurbelwelle zylinderselektiv zu bestimmen. Dadurch ist es möglich, Verbrennungsfehler bzw. Verdichtungsfehler zu diagnostizieren bzw. zu beurteilen.
5. Drehzahlregelung (Leistungsregelung)
   Diese ist wiederum Bestandteil der Steuereinheit 2. Um bei wechselnden Lastzuständen die Drehzahl konstant halten zu können, ist es notwendig, mittels eines in der programmierbaren Steuerund Regelelektronik regenerierten Stromes den angeschlossenen Verstellmotor 7 der Drosselklappe in eine gewünschte Position zu bringen und damit die Drehzahl bzw. die Leistung des Motors zu steuern. Über die Öffnung der Drosselklappe wird im Zylinder die Zufuhrmenge des Brenngas-Luftgemisches und das entstehende Drehmoment gesteuert. Für die Drehzahlmessung werden die Impulse des Kurbelwellengebers 6 und des Nockenwellengebers 6 erfaßt und somit wird das Gleichgewicht von Bedarf und Erzeugung des Drehmomentes über einen Soll-Ist-Vergleich geregelt. Die Regelung richtet sich nach dem Leistungs- bzw. Momentbedarf der angetriebenen Maschinen.

Der NOₓ-Sensor beziehungsweise Fluor- oder Chlor-Sensor 6 weist zwei Anschlüsse 10a, 10b auf, die in geeigneter Weise mit den Eingängen 4 verschaltet sind. Der eigentliche NOₓ-Sensor weist eine kationenleitende Keramik in Form eines Festelektrolyts 11 auf, die neben einer Hilfselektrode 12 angeordnet ist. Die Hilfselektrode 12 ist an die jeweilige Gasart durch entsprechende Modifizierung anpaßbar. Weiterhin sind eine Referenzelektrode 13 und eine Arbeitselektrode 14 vorhanden. Dieser Sensor 6 nutzt die elektromotorische Kraft EMK der freibeweglichen Elektronen zwischen Referenzelektrode 13 und Hilfselektrode 12 aus, wobei die elektromotorische Kraft EMK ein Ausgangsspannungssignal erzeugt, das wiederum direkt proportional zur Gaskonzentration ist. Es erfolgt also eine potentiometrische Messung der Gaskonzentration.

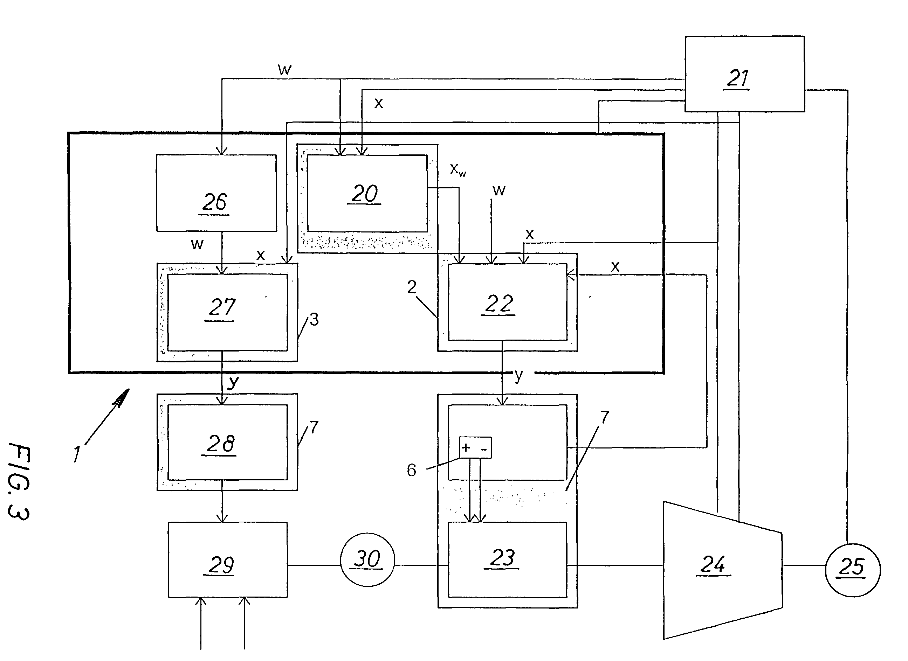

In Fig. 3 sind die Hauptregelkreise der programmierbaren Steuer- und Regelelektronik 1 dargestellt. Die programmierbare Steuer- und Regelelektronik 1 weist einen Leistungsregler 20 auf, dem von einer Leitebene 21 ein entsprechender Sollwert w und ein Istwert x zugeführt werden. Der Leistungsregler 20 gibt ein Signal x_{w} ab, das neben dem Sollwert w und dem Istwert x einem Drehzahlregler 22 als Bestandteil der Steuereinheit 2 zugeführt wird. Dieser Drehzahlregler 22 gibt ein Signal y aus, mit dem ein Stellglied 7 zur Verstellung der Drosselklappe 23 angesteuert wird. Hierzu ist weiterhin ein Element vorhanden, das die Drosselklappen-Stellgliedposition 23a erkennt. Von der zu steuern bzw. zu regelenden Brennkraftmaschine 24 und dem einen angetriebenen Generator 25 werden entsprechende Betriebsparameter erfaßt und über die Leitebene 21 und die Eingänge 4 der programmierbaren Steuer- und Regelelektronik 1 zugeführt. In dieser ist weiterhin die Kennlinie für die Leistung 26 abgelegt, die dem Gemischregler 27 als Bestandteil der Überwachungseinheit 3 zugeführt wird. Von diesem wird ein Stellantrieb 28 als ein Stellglied 7 angesteuert, das das Verhältnis von einem Gasmischer 29 zugeführten Luft und Gas einstellt. Dieses Gemisch wird über einen Abgasturbolader 30 und die Drosselklappe 23 der Brennkraftmaschine 24 zugeführt.

## Patentansprüche

1. Verfahren zum Steuern, Regeln und Überwachen einer Brennkraftmaschine mit einer programmierbaren Steuer- und Regelelektronik, der von an der Brennkraftmaschine angeordneten Sensoren und/oder Gebern Meßsignale zugeführt werden und wobei die Steuer- und Regelelektronik Stellglieder und/oder Aktoren zum Eingriff in den Betrieb der Brennkraftmaschine ansteuert und wobei die Steuer- und Regelelektronik eine Schnittstelle für einen Datenaustausch aufweist,
dadurch gekennzeichnet, daß mit einem Abgas-Sensor (6) während des Betriebs der Brennkraftmaschine kontinuierlich die Konzentration der Stickoxide (NOₓ) und/oder des Fluors und/oder des Chlors im Abgas der Brennkraftmaschine wertemäßig erfaßt wird.

2. Verfahren nach Anspruch 1,
dadurch gekennzeichnet, daß von dem Stellglied und/oder Aktor (7) der Stellantrieb (28) eines Gemischreglers (27) eines Gasmotors angesteuert wird.

3. Verfahren nach einem der vorherigen Ansprüche,
dadurch gekennzeichnet, daß die Steuer- und Regelelektronik (1) einen Baustein "Laufruhemessung" aufweist, mit dem das von der Brennkraftmaschine abgegebene Moment auf die Kurbelwelle zylinderselektiv bestimmt wird.

4. Steuer- und Regelelektronik zum Steuern, Regeln und Überwachen einer Brennkraftmaschine, wobei der Steuer- und Regelelektronik von Sensoren und/oder Gebern Meßsignale zugeführt werden und wobei die Steuer- und Regelelektronik Stellglieder und/oder Aktoren zum Eingriff in den Betrieb der Brennkraftmaschine ansteuert und wobei die Steuer- und Regelelektronik eine Schnittstelle für einen Datenaustausch aufweist,
dadurch gekennzeichnet, daß ein Abgas-Sensor (6) vorhanden ist, der kontinuierlich während des Betriebes der Brennkraftmaschine die Konzentration der Stickoxide (NOₓ) und/oder des Fluors und/oder des Chlors im Abgas der Brennkraftmaschine wertemäßig erfaßt.

5. Steuer- und Regelelektronik nach Anspruch 4,
dadurch gekennzeichnet, daß der Abgas-Sensor (6) eine ionenleitende, insbesondere eine kationenleitende Keramik (Festelektrolyt) (11), eine Hilfselektrode (12) zur Anpassung an die Gasart, eine Referenzelektrode (13) und eine Arbeitselektrode (14) aufweist.

6. Steuer- und Regelelektronik nach einem der vorherigen Ansprüche 4 oder 5,
dadurch gekennzeichnet, daß eine elektromotorische Kraft (EMK) zwischen Referenzelektrode (13) und Hilfselektrode (12) des Abgas-Sensors (6) für ein direkt proportionales Ausgangsspannungssignal zu der Gaskonzentration ausgewertet wird

7. Steuer- und Regelelektronik nach einem der Ansprüche 4 bis 6,
dadurch gekennzeichnet, daß eine potentiometrische Messung der Gaskonzentration erfolgt.

8. Steuer- und Regelelektronik nach einem der Ansprüche 4 bis 7,
dadurch gekennzeichnet, daß die Steuer- und Regelelektronik (1) einen Baustein "Laufruhemessung" aufweist, mit dem das von der Brennkraftmaschine abgegebene Moment auf die Kurbelwelle zylinderselektiv bestimmt wird.
